# EUROPEAN PATENT SPECIFICATION

(11) **EP 1 958 413 B1**
(45) Date of publication and mention of the grant of the patent: **26.08.2015**
(21) Application number: 05813479.2
(22) Date of filing: 05.12.2005
(51) Int. Cl.: H04L 29/06, H04L 12/24

(54) **A METHOD AND A SYSTEM FOR NETWORK MANAGEMENT INFORMATION REPRESENTATION**
VERFAHREN UND SYSTEM ZUR NETZWERKVERWALTUNG DER INFORMATIONSREPRÄSENTATION
PROCEDE ET SYSTEME DE REPRESENTATION D'INFORMATIONS DE GESTION D'UN RESEAU

(43) Date of publication of application: 20.08.2008
(73) Proprietor: Telefonaktiebolaget L- M Ericsson (publ), 164 83 Stockholm (SE)
(72) Inventor: CLEARY, David, Athlone (IE); DANEV, Boris, Athlone (IE)
(74) Representative: Stasiewski, Piotr Grzegorz
(86) International application number: PCT/EP2005/056488
(87) International publication number: WO 2007/065470

(56) References cited:
- A. K. Y. WONG, P. RAY, N. PARAMESWARAN, J. STRASSNER: "Ontology Mapping for the Interoperability Problem in Network Management" IEEE JOURNAL IN SELECTED AREAS IN COMMUNICATIONS, 1 October 2005 (2005-10-01), pages 2058-2068, XP002396616 USA [retrieved on 2006-08-28]
- J. E. L. VERGARA, V. A. VILLAGRA, J. I. ASCENSIO, J. BERROCAL: "Ontologies: Giving Semantics to Network Management Models" IEEE NETWORK, 1 May 2003 (2003-05-01), pages 15-21, XP002396617 USA Retrieved from the Internet: URL:http://jungla.dit.upm.es/~jlopez/publi caciones/ieeenetwork03.pdf> [retrieved on 2006-08-28]
- JORGE E. LÓPEZ DE VERGARA, VÍCTOR A. VILLAGRÁ, JULIO BERROCAL: "Semantic Management: advantages of using an ontology-based management information meta-model" PROCEEDINGS OF THE HP OPENVIEW UNIVERSITY ASSOCIATION NINTH PLENARY WORKSHOP (HP-OVUA'2002), 11 June 2002 (2002-06-11), pages 1-14, XP002396618 Retrieved from the Internet: URL:http://jungla.dit.upm.es/~jlopez/publi caciones/hpovua02.pdf> [retrieved on 2006-08-28]
- ANTONIO GUERRERO, VÍCTOR A. VILLAGRÁ, JORGE E. LÓPEZ DE VERGARA: "Ontology-based integration of management behaviour and information definitions using SWRL and OWL" PROCEEDINGS OF THE 16TH IFIP/IEEE DISTRIBUTED SYSTEMS: OPERATIONS AND MANAGEMENT (DSOM 2005), 24 October 2005 (2005-10-24), XP002396620 Barcelona, Spain Retrieved from the Internet: URL:http://jungla.dit.upm.es/~jlopez/publi caciones/dsom05-swrl.pdf> [retrieved on 2006-08-28]

## Description

### FIELD OF THE INVENTION

The present invention relates to a system for representation of network management information and comprising a network management system represented through a machine-readable basic network information model comprising a number of network elements, each comprising a number of managed objets with managed object instances, and an external network management interface. The invention also relates to a method for representation of network management information of a management system represented through a machine-readable basic network information model, comprising a number of network elements, each with a number of managed objects with managed object instances, and an external network management interface.

### STATE OF THE ART

The TeleManagement Forum (TMF) is standardizing a next generation operation system and support, NGOSS, for defining, for service providers and their suppliers, a comprehensive, integrated framework for developing, procuring and deploying operational and business support systems and software. NGOSS is provided as a set of documents making up a toolkit of industry-agreed specifications and guidelines covering key business areas and technical areas and defined methodology for using the tools. NGOSS uses a "Lifecycle" approach to development of management systems, based on clear definitions of business processes, specifications and architecting software and systems to automate those processes in a technology independent manner.

The ability to integrate network management systems forms the basis for construction of a successful OSS (Operation System and Support) and BSS (Business Systems and Support) system for telecommunication operators. Such an integration is however a costly activity requiring considerable tailoring and adoption of systems. Current application integration in 3G Network Management Systems (NMS) is achieved using machine interfaces (CORBA) and XML representation of the network data represented in a Managed Object Model, MOM, which is an object-oriented high-level abstraction of entities being managed in the network.

Enterprise Application Integration (EAI) is a software architectural discipline that is commonly used to describe system integration activities of the above mentioned kind. Historically EAI solutions have revolved around priority adoptions of applications and the use of middleware frameworks such as CORBA, MQseries etc. In today's business to business online application development the concepts of EAI have been adapted and generalised for use on the Internet, which actually forms a new field of computing most commonly referred to as a service-oriented architecture, SOA. Even if SOA is a software architectural concept, the de-facto realisation of it today is based on Web services and the Simple Object Access Protocol (SOAP).

Web services provide a standard means of interoperating between different software applications, running on a variety of platforms and/or frameworks. Web services are characterized by their great interoperability and extensibility, which mainly is due to the use of XML (Extensible Markup Language), and they can be combined in a loosely coupled way in order to achieve complex operations.

Programs providing simple services can interact with each other in order to deliver sophisticated added-value applications. Along with the development of Web services, the requirements for smart representations of the services and service data for intelligent manipulation such as discovery and retrieval of information are becoming higher.

The Semantic Web is a concept providing a common framework allowing data to be shared and reused across applications, enterprises and community boundaries. The Semantic Web centers the framework on ontologies for representation of information. Ontologies are taxonomies of concepts and their attributes in a given domain together with the formal representation of domain assumptions. Formal here means that it is semantically rich and based on a well-understond logical paradigm. Formal ontologies are hence based on well-defined semantics enabling machine-readability and reasoning about information.

Telecommunication equipment vendors have standardised the integration of Network Management as specified by 3GPP (Third Generation Partnership Project) focusing on representation of management data with little or no semantic information in a technology neutral manner, providing a mapping to various solutions sets. These solution sets are mainly based on CORBA and XML. However, the interface definition is limited to being centred on a syntactical specification. The problem with large scale Enterprise Application Integration (EAI) and NMS integration to OSS and BSS systems resolved around the meaning of the information. 3GPP has for example standardized some syntactical constructs in the network management model, but despite that there are many vendor proprietary constructs. As an example, there could be two vendor specific statements with standard and proprietary constructs as follows:
{node=RNC, name=Athlone, network=Vodafone,
vsDataContainer=UniSaalProfile, attributes=maxStat}
   which is semantically equivalent to:
   {node=RNC, name=Athlone, network=Vodafone,
   vsDataContainer=UniSaalDefinitions, attributes=mStat}

However, these two sets of information are partly syntactically equivalent due to standardization efforts, but they are also use vendor specific vocabulary to describe non-standardized information or management concepts. This is a problem which complicates interoperability or integration with service-oriented Enterprise Application Integration solutions in a flexible way without affecting the implementations of current NMSs.

There are known documents related to use of ontology in network management, namely:
- A. K. Y. WONG, P. RAY, N. PARAMESWARAN, J. STRASSNER: "Ontology Mapping for the Interoperability Problem in Network Management" IEEE JOURNAL IN SELECTED AREAS IN COMMUNICATIONS, 1 October 2005 (2005-10-01), pages 2058-2068;
- J. E. L. VERGARA, V. A. VILLAGRA, J. I. ASCENSIO, J. BERROCAL: "Ontologies: Giving Semantics to Network Management Models" IEEE NETWORK, 1 May 2003 (2003-05-01), pages 15-21;
- JORGE E. LÓPEZ DE VERGARA, VECTOR A. VILLAGRÁ, JULIO BERROCAL: "Semantic Management: advantages of using an ontology-based management information meta-model" PROCEEDINGS OF THE HP OPENVIEW UNIVERSITY ASSOCIATION NINTH PLENARY WORKSHOP (HP-OVUA'2002), 11 June 2002 (2002-06-11); pages 1-14; and
- ANTONIO GUERRERO, VÍCTOR A. VILLAGRÁ, JORGE E. LÓPEZ DE VERGARA: "Ontology-based integration of management behaviour and information definitions using SWRL and OWL" PROCEEDINGS OF THE 16TH IFIP/IEEE DISTRIBUTED SYSTEMS: OPERATIONS AND MANAGEMENT (DSOM 2005), 24 October 2005 (2005-10-24).

However operations as in the invention now to be described are neither disclosed nor suggested in the prior art document.

### SUMMARY OF THE INVENTION

What is needed is therefore a system as initially referred to which enables integration of network management systems (NMS), particularly existing or current management systems, with existing or a future service-oriented architectures. Particularly a solution is needed which allows bridging of current management systems to service-oriented architectures without affecting the current NMS implementations. A system is also needed which allows an easy integration of NMS systems to service-oriented architectures such as Web services or Semantic Web services. Particularly a solution is needed which is applicable in a multivendor system environment. Even more particularly a system is needed which uses and encapsulates current standards, such as for example 3GPP and W3C standards. Particularly a system is needed which can be used for Future Enterprise Application Integration (EAI) based on service-oriented architectures, which e.g. are based on smart web services which particularly evolve quickly and change the specifications, without affecting the network management system.

A particular object of the invention is to provide an NGOSS system and providing an architectural process to extend the life cycle of existing NMS/EMS system. It is particularly an object to provide an external network management interface, which in an easy and flexible manner enables integration of a management systems with new and/or evolving service-oriented architectures.

Therefore a system as initially referred to is provided which comprises first mapping means adapted to .generate or establish, e.g. create or fetch, mapping rules for mapping the machine-readable basic network information model to a formal ontology based network information model, information enrichment means for manually, or allowing manual and/or automatical, enriching of the information of the formal ontology based model semantically to provide a semantically enriched formal ontology based network information model, processing means adapted to receive mapping rules from the first mapping means, network instance data represented in a generic mark-up language from the external network management interface, and the semantically enriched formal ontology based network information model, and to automatically instantiate the semantically enriched formal ontology based model using said mapping rules and to transform the enriched formal ontology network information model comprising instances ontologies to formal logic statements.

The system further comprises a formal model storing means for storing the formal logic statements, said storing means containing a semantically enriched machine-readable representation of the network management system model forming a semantically extended configuration-aware external network management interface.

The basic network information model particularly comprises an information model representation based on UML, Unified Modelling Language.

In an advantageous implementation the UML representation should be exchangeable according to the OMG (Object Management Group) XMI (XML Metadata Interchange) standard e.g. version 2.0.

The first mapping means are particularly adapted to perform a mapping of the UML representation (or any other similar representation) to a given ontology language syntax. Particularly the ontology language syntax is OWL (Ontology Web Language) or F-logic. The enrichment means are particularly adapted to add information invariants on properties, concepts and/or relationships comprising network domain information. In addition thereto the added information may comprise network model manipulation information to be used for providing network configuration task flow generation.

Particularly the network instance data is represented based on 3GPP Bulk XML IRP. The external network management interface particularly comprises the so-called Northbound network management system (NMS) interface and provides network instance data according to the 3GPP Bulk XML IRP. Reference is hereby made to 3GPP TS 32.615 v5.5.1 (2004-12), particularly chapter 4.1 and chapter 4.3, pages 12-13.

In one implementation the formal logic statements representing the instances and ontologies in the ontology language syntax are expressed using Description Logics. Alternatively Frame Logics (F-logic) is used. The system particularly provides a semantically extended configuration-aware external network management interface which is adapted to provide a bridge between the network managing system and external service-oriented architectures (SOAs).

The invention also suggests a method as initially referred to which comprises the steps of;
providing a representation of a basic network information model in a machine-readable form from an external network management interface to first mapping means;
generating, e.g. creating or fetching, mapping rules for the mapping of the representation of the basic network information model to a formal ontology based network information model in a given ontology language syntax;
forwarding the provided, e.g. generated or fetched, mapping rules to a processing means;
storing the mapping rules in the processing means;
enriching the formal ontology based model semantically to provide an enriched formal ontology based network information model.

It should be clear that the order of the last three steps can be any one and/or one or more of the steps can be performed simultaneously etc.

The method further comprises the steps of;
providing the enriched formal ontology based network information model to the processing means, and;
providing network instance data from the external network management interface to the processing means;
using the mapping rules and the network instance data stored in the processing means to automatically instantiate the enriched formal ontology based network information model in said processing means, hence providing a formal representation of the network data;
storing the formal representation of the network data in formal model storing means, hence providing a semantically extended configuration-aware, external network management interface.

In a particular embodiment the basic network information model comprises an UML information model representation which here particularly follows the OMG XMI standard.

The mapping rules generation step particularly comprises; mapping the UML representation (or any other relevant, similar representation) to a given ontology language syntax.

The enriching step particularly comprises adding information invariants on properties, concepts and/or relationships comprising network domain information. This is particularly performed manually or partly manually although it could also be provided for automatically.

The enriching step further comprises, in a particular embodiment, adding network model manipulation information for generation of configuration task workflows, which particularly also is done at least partly manually.

The network instance data particularly comprises Bulk XML data and the external network management particularly comprises a Northbound NMS interface.

The method preferably comprises the step of, in the processing means, using Description Logics, or alternatively Frame Logics, to express the formal logic statements representing the instances and ontologie in the ontology language syntax.

Most particularly the method also comprises the step of storing the formal representation of the network data expressing formal logic statements, for example Description Logics or Frame Logics, in formal model storing means hence comprising a semantically enriched machine-readable network model representation. Still further the method advantageously provides a bridge between the network management system and external service-oriented architectures using the enriched machine-readable network model representation as a semantically extended configuration-aware external network management interface.

Although, the invention particularly provides a way to build an enriched network management model, it enables integration with smart service oriented EAI solutions in a highly flexible way on top of the EMS standards, without affecting the core of current NMS implementations.

Particularly, according to the invention, a number of architectural steps or processes are provided which have an easy, highly automated way to expose semantically enriched network management system Northbound interfaces for use in next generation service-oriented architectures for example based on smart web services, without affecting the core of current NMS implementations. This means that existing NMS systems easily can be integrated into operators' business processors without requiring any redesigning of the current systems.

### BRIEF DESCRIPTION OF THE DRAWINGS

The invention will in the following be more thoroughly described, in a non-limiting manner, and with reference to the accompanying drawings, in which:
- Fig. 1: shows a block diagram of a network management system information representation system according to the invention,
- Fig. 2: is a block diagram similar to Fig. 1 but wherein the required steps are indicated, and
- Fig. 3: is a flow diagram describing the procedure according to one implementation of the present invention.

### DETAILED DESCRIPTION OF THE INVENTION

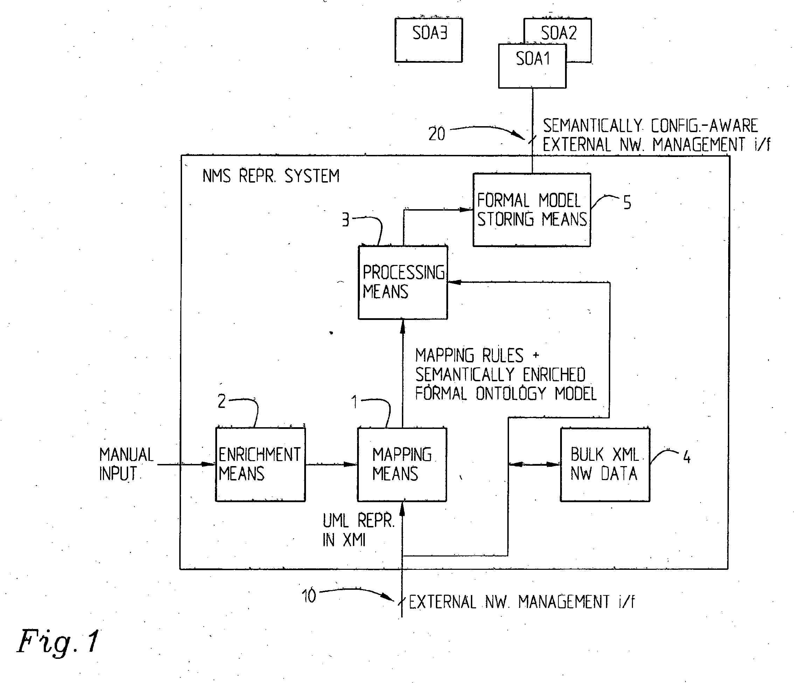

Fig. 1 is a block diagram describing an NMS representation system according to the present invention with an external network management interface 10 in a conventional manner which may comprise a so-called Northbound NMS interface. A Northbound NMS interface is a for example described in 3GPP TS 32.615, particularly chapter 4.1, and chapter 4.3, pages 12-13 showing ,an XML example of how data provided by the Northbound NMS interface may look. Mapping means 1 are provided for mapping for example over an external third party interface 10 input UML representation of the information model of the NMS system for example expressed in the 3GPP IRP standard, to an ontology model using an ontology language syntax, for example OWL. UML-OWL-mapping is for example described in "Extending the Unified Model Language for ontology development", 2004, by K. Baclawski, M. Kokar and P. Kogut.

The system also comprises enrichment means 2 for enriching the formal ontology model obtained by the mapping means 1. In fact there might not be any enrichment means as such, but it merely relates to input in some way of information in order to semantically enrich the formal model and this can be done manually or more or less automatically or as a mixture of both. The enrichment means may hence constitute factual means or only conceptual means.

The system further comprises processing means 3 to which the mapping rules generated or provided in the mapping means 1 and the semantically enriched formal ontology model are provided. In addition thereto network instance data is fetched from the external network management interface 10, for example as Bulk XML network data from Bulk XML network data holding means 4. The processing means uses the instance data, for example the Bulk XML network data, for automatically instantiating the semantically enriched formal ontology model using the mapping rules from the mapping means 1. The obtained formal model of network data is then stored into formal model storing means 5, and provides a new external interface, referred to as the semantically extended configuration-aware external network management interface 20 which is made available for manipulation in applications in different SOA based frameworks, here SOA 1, SOA 2, SOA 3.

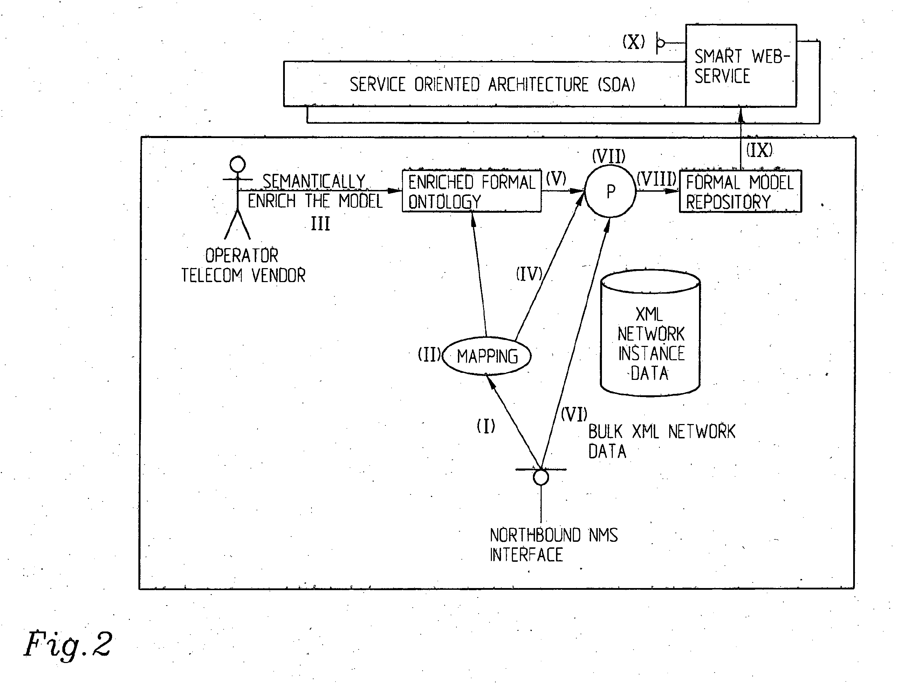

Fig. 2 is a simplified block diagram describing an implementation of the inventive concept. In a first step, an UML representation of the information model expressed in a standard, for example 3GPP IRP in a machine-readable fashion as specified by the OMG XMI standard is provided by Northbound NMS interface to mapping means, I. Based on mapping rules for example between UML and OWL, in the mapping means a base ontology is automatically generated which is derived from a high-level concept mapping of the initial UML model representation to a given ontology language syntax, such as OWL or similar, II. The mapping rules are provided to processing means P where they are stored and after that they will be used for conversion of instances of network data in a process, in processing means. Simultaneously, before, or after the step II, an enrichment of the formal ontology model obtained in the mapping step II above, is performed, III. Since knowledge about, the network can-not be automatically generated, this step allows human intervention to verify and augment the ontology model generated in the mapping step. The operator can add invariants or properties, concepts or relationships depending on the required level of semantical enhancement of the data model. This may include not only network domain knowledge, but also information about how to manipulate the model to achieve a network configuration task based on formal representation of configuration workflows. This provides a semantically rich configuration-aware network management interface.

The provisioning of the ontology based workflows etc. is described in the copending patent application filed on the same day by the same applicant and with the title "A method and a system relating to a network management", which also describes provisioning of formal ontology network model from a first basic network model, and which herewith is incorporated herein by reference.

The result of step III is an enriched ontology model derived from the basic model which is represented using the same formal ontology language as defined in step II discussed above, V. Subsequently or substantially simultaneously (or even previously) network instance data based on a standard specification, for example 3GPP Bulk XML IRP, is fetched from the Northbound NMS interface, and forwarded to the process P, VI, c.f. e.g. 3GPP SA 5 working Group TS 32.101: "Telecom Management Principles and High Level requirements v.6.0.0" also describing the Northbound NMS interface.

The instance data provided from step VI is in the process used to automatically instantiate the ontology model defined in step V. The automation is possible due to the mapping rules forwarded to the processor means in step IV as discussed above.

The instances and ontologies represented in the ontology language syntax specified in step II above, are transformed to formal logic statements, for example using description logics or frame logics. This formal representation of network data is stored into a formal model repository, VIII. The formal model repository contains the formal ontologies and the instances together. This structure, the formal repository, now contains the semantically enriched machine-readable representation of the network model, and a new interface is obtained on top of the formal model repository, providing a semantically rich configuration-aware Northbound NMS interface and hence allowing easier future Enterprise Application Integration EAI, IX. The network management information is now available for manipulation in a number of service-oriented architecture, SOA, based frameworks, X.

Hence, a number of architectural steps or processes are given which allow an easy, highly automated way to expose semantically enriched network management system Northbound interfaces for use in coming generations service-oriented architectures based on smart web services and it still does not affect the core of current implementations. This allows management systems to be easily integrated into operators' business processes without any redesign requirements on the current systems. Hence, on top of the EMS standards a richer network management model is built for interoperability or integration with smart service-oriented EAI solutions in a highly automated and flexible way without affecting the core of current NMSs.

The inventive concept can be used to facilitate Model Driven Architecture (MDA) development for NMS since it provides a formal model of the network information.

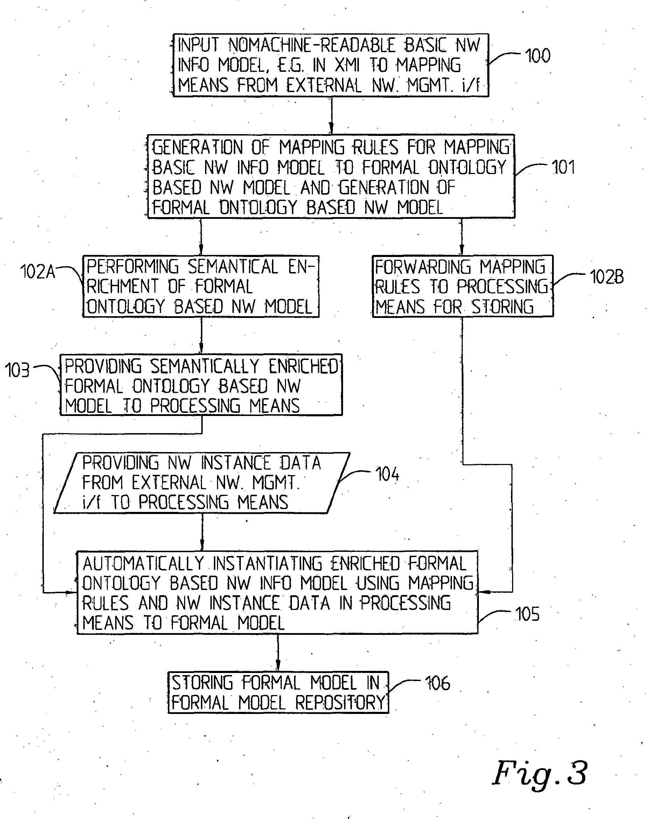

In Fig. 3 the basic steps for providing the network information representation according to the invention are illustrated in the form of a flow diagram.

First, a machine-readable basic software network information model, for example in XMI, is input to mapping means from an external network management interface, for example a Northbound NMS interface, 100. Mapping rules are generated or fetched for mapping a basic network information model to a formal ontology based network model, 101. Then a semantical enrichment of the formal ontology based network model is performed in any appropriate manner, 102A. After that, simultaneously, or before that, the mapping rules established in the mapping means or fetched to the mapping means, are forwarded to a processing means for storing and later reuse, 102B. However, after the semantical enrichment corresponding to step 102A, a semantically enriched formal ontology based network model is provided to the processing means, 103. Network instance data is also provided over the external network management interface, for example the (conventional) Northbound NMS interface, 104. This can be done before, after or simultaneously with step 103. Subsequently there is performed an automatical instantiation of the enriched formal ontology based network information model using the mapping rules and network instance data in the processing means to a formal network information model, 105. The formal model is then stored in a formal model repository, 106.

It should be clear that the invention can be varied in a number of ways whitin the scope of the appended claims and it is not limited to any particular known interfaces or any particular generic markup language etc. but any similar, corresponding interface, markup language etc. can be used.

According to the invention an architecture and a method are provided which allow current CORBA/XML Northbound interfaces (and other similar interfaces as well) of network management systems to expose semantically rich network information for use by smart web service oriented architectures based on web services and semantic web technologies in an automated way.

## Claims

1. A system for representation of network management information, comprising a network management system represented through a machine-readable basic network information model comprising a number of network elements, each comprising a number of managed objects with managed object instances, and further comprising an external network management interface (10),
**characterized in**
**that** it comprises first mapping means (1) adapted to generate or fetch mapping rules for mapping the machine-readable basic network information model to a formal ontology based network information model,
information enrichment means (2) for manually and/or automatically enriching the information of the formal ontology based model semantically, thus providing a semantically enriched formal ontology based network information model,
processing means (3) adapted to receive the mapping rules from the first mapping means (1), network instance data represented by a generic mark-up language from the external network management interface, and the semantically enriched formal ontology based network information model, and to automatically instantiate the semantically enriched formal ontology based model using said mapping rules and to transform the enriched formal ontology network information model comprising instances and ontologies to formal logic statements, a formal model storing means for storing the formal logic statements, and in that said formal model storing means (5) contains a semantically enriched machine-readable representation of the network management system information model forming a semantically extended configuration-aware external network management interface (20).

2. A system according to claim 1,
**characterized in**
**that** the basic network information model comprises an UML information model representation.

3. A system according to claim 2,
**characterized in**
**that** UML representation is exchangeable with the OMG XMI, OMG XML Metadata Interchange, standard.

4. A system according to claim 2 or 3,
**characterized in**
**that** the first mapping means (1) are adapted to perform a mapping of the UML representation to a given ontology language syntax.

5. A system according to claim 4,
**characterized in**
**that** the ontology language syntax is OWL.

6. A system according to any one of the preceding claims,
**characterized in**
**that** the enrichment means (2) are adapted to add information invariants on properties, concepts and/or relationships comprising network domain information.

7. A system according to claim 6,
**characterized in**
**that** the added information additionally comprises network model manipulation information to be used for configuration task workflow generation.

8. A system according to any one of the preceding claims,
**characterized in**
**that** the network instance data is represented based on 3GPP Bulk XML IRP.

9. A system according to any one of the preceding claims,
**characterized in**
**that** the external network management interface (10), comprises a Northbound NMS interface.

10. A system according to any one of the preceding claims,
**characterized in**
**that** the formal logic statements representing the instances and ontologies in the ontology language syntax are expressed using Description Logics.

11. A system according to any one of claims 1-9,
**characterized in**
**that** the formal logic statements representing the instances and ontologies in the ontology language syntax are expressed using Frame Logics, F-logic.

12. A system according to any one of the preceding claims,
**characterized in**
**that** the semantically extended configuration-aware external netework management interface (20) is adapted to provide a bridge between the network management system and external service-oriented architectures.

13. A method for representation of network management information of a network management system represented through a machine-readable basic network information model comprising a number of network elements, each comprising a number of managed objects with managed object instances, and comprising an external network management interface,
**characterized in**
**that** it comprises the steps of:
- Providing (100) a representation of the basic network information model in a machine-readable form from an external third-party interface to first mapping means,
- generating (101) or fetching mapping rules for mapping the representation of the basic network information model to a formal ontology based network information model in a given ontology language syntax,
- forwarding (102B) the generated or fetched mapping rules to a processing means,
- storing (106) the mapping rules in the processing means;
- enriching (102A) the formal ontology based model semantically, to provide an enriched formal ontology based network information model;
- providing (103) the enriched formal ontology based network information model to the processing means, and
- providing (104) network instances data from the external network management interface to the processing means;
- using the mapping rules and the network instance data stored in the processing means to automatically instantiate (105) the enriched formal ontology based network information model in said processing means; hence, providing a formal representation of the network data;
- storing (106) the formal representation of the network data in formal model storing means, hence forming a semantically extended, configuration-aware external network management interface.

14. A method according to claim 13,
**characterized in**
**that** the basic network information model comprises an UML information model representation.

15. A method according to claim 14,
**characterized in**
**that** the UML representation follows the OMG XMI standard.

16. A method according to claim 15,
**characterized in**
**that** the mapping rules generating step comprises:
- mapping the UML representation to a given ontology language syntax.

17. A method according to any one of claims 13-16,
**characterized in**
**that** the enriching step comprises:
- adding information invariants on properties, concepts and/or relationships comprising network domain information.

18. A method according to claim 17,
**characterized in**
**that** the enriching step further comprises:
- adding network model manipulation information for generation of configuration task workflows.

19. A method according to any one of claims 13-18,
**characterized in**
**that** the network instance data comprises Bulk XML data.

20. A method according to any one of claims 13-19,
**characterized in**
**that** the external network management interface (10) comprises a Northbound NMS interface.

21. A method according to any one of claims 13-20,
**characterized in**
**that** it comprises the step of, in the processing means:
- using Description Logics to express the formal logic statements representing the instances and ontologies in the ontology language syntax.

22. A method according to any one of claims 13-20,
**characterized in**
**that** it comprises the step of, in the processing means:
- using Frame Logic to express the formal logic statements representing the instances and ontologies in the ontology language syntax.

23. A method according to any one of claims 13-22,
**characterized in**
**that** it comprises the step of:
- storing the formal representation of the network data expressed in formal logic statements, e.g. in Description Logics or Frame Logics, in formal model storing means, hence providing a semantically enriched machine-readable network model representation.

24. A method according to claim 23,
**characterized in**
**that** it comprises the steps of:
- providing a bridge between the network management system and external service-oriented architectures using the enriched machine-readable network model representation as a semantically extended, configuration-aware external network management interface.

## Patentansprüche

1. System zur Darstellung von Netzverwaltungsinformationen, umfassend ein Netzverwaltungssystem, das durch ein maschinenlesbares Basisnetzinformationsmodell dargestellt wird, das eine Anzahl von Netzelementen umfasst, die jeweils eine Anzahl von verwalteten Objekten mit Instanzen von verwalteten Objekten umfassen, und ferner umfassend eine externe Netzverwaltungsschnittstelle (10),
**dadurch gekennzeichnet,**
**dass** es erste Zuordnungsmittel (1) umfasst, die so ausgelegt sind, dass sie Zuordnungsregeln zum Zuordnen des maschinenlesbaren Basisnetzinformationsmodells zu einem formalen ontologiebasierten Informationsmodell erzeugen oder abrufen,
Informationsanreichungsmittel (2) zum manuellen und/oder automatischen semantischen Anreichern der Informationen des formalen ontologiebasierten Modells, um dadurch ein semantisch angereichertes formales ontologiebasiertes Netzinformationsmodell bereitzustellen,
Verarbeitungsmittel (3), die so ausgelegt sind, dass sie die Zuordnungsregeln von den ersten Zuordnungsmitteln (1), Netzinstanzdaten, die durch eine generische Auszeichnungssprache dargestellt werden, von der externen Netzverwaltungsschnittstelle und das semantisch angereicherte formale ontologiebasierte Netzinformationsmodell empfangen und das semantisch angereicherte formale ontologiebasierte Netzinformationsmodell unter Verwendung der Zuordnungsregeln automatisch instanziieren und das angereicherte formale Ontologie-Netzinformationsmodell, das Instanzen und Ontologien umfasst, in formale logische Anweisungen umwandeln, ein Formalmodellspeichermittel zum Speichern der formalen logischen Anweisungen, und dadurch, dass das Formalmodellspeichermittel (5) eine semantisch angereicherte maschinenlesbare Darstellung des Netzverwaltungssystem-Informationsmodells enthält, die eine semantisch erweiterte konfigurationsbewusste externe Netzverwaltungsschnittstelle (20) bildet.

2. System nach Anspruch 1,
**dadurch gekennzeichnet,**
**dass** das Basisnetzinformationsmodell eine UML-Informationsmodelldarstellung umfasst.

3. System nach Anspruch 2,
**dadurch gekennzeichnet,**
**dass** die UM-Darstellung mit dem OMG XMI, OMG XML Metadata Interchange,-Standard austauschbar ist.

4. System nach Anspruch 2 oder 3,
**dadurch gekennzeichnet,**
**dass** die ersten Zuordnungsmittel (1) so ausgelegt sind, dass sie ein Zuordnen der UML-Darstellung zu einer bestimmten Ontologie-Sprachsyntax durchführen.

5. System nach Anspruch 4,
**dadurch gekennzeichnet,**
**dass** die Ontologie-Sprachsyntax OWL ist.

6. System nach einem der vorhergehenden Ansprüche,
**dadurch gekennzeichnet,**
**dass** die Anreicherungsmittel (2) so ausgelegt sind, dass sie Informationsinvarianten über Eigenschaften, Konzepte und/oder Beziehungen hinzufügen, die Netzdomäneninformationen umfassen.

7. System nach Anspruch 6,
**dadurch gekennzeichnet,**
**dass** die hinzugefügten Informationen außerdem Netzmodellhandhabungsinformationen umfassen, die zur Konfigurationsaufgaben-Workflow-Erzeugung verwendet werden sollen.

8. System nach einem der vorhergehenden Ansprüche,
**dadurch gekennzeichnet,**
**dass** die Netzinstanzdaten basierend auf 3GPP Bulk XML IRP dargestellt sind.

9. System nach einem der vorhergehenden Ansprüche,
**dadurch gekennzeichnet,**
**dass** die externe Netzverwaltungsschnittstelle (10) eine Northbound-NMS-Schnittstelle umfasst.

10. System nach einem der vorhergehenden Ansprüche,
**dadurch gekennzeichnet,**
**dass** die formalen logischen Anweisungen, welche die Instanzen und Ontologien in der Ontologie-Sprachsyntax darstellen, unter Verwendung von Beschreibungslogiken ausgedrückt werden.

11. System nach einem der Ansprüche 1 bis 9,
**dadurch gekennzeichnet,**
**dass** die formalen logischen Anweisungen, welche die Instanzen und Ontologien in der Ontologie-Sprachsyntax darstellen, unter Verwendung von Rahmenlogiken, F-Logic, ausgedrückt werden.

12. System nach einem der vorhergehenden Ansprüche,
**dadurch gekennzeichnet,**
**dass** die semantisch erweiterte konfigurationsbewusste externe Netzverwaltungsschnittstelle (20) so ausgelegt ist, dass sie eine Brücke zwischen dem Netzverwaltungssystem und externen dienstorientierten Architekturen bereitstellt.

13. Verfahren zur Darstellung von Netzverwaltungsinformationen eines Netzverwaltungssystems, das durch ein maschinenlesbares Basisnetzinformationsmodell dargestellt wird, das eine Anzahl von Netzelementen umfasst, die jeweils eine Anzahl von verwalteten Objekten mit Instanzen von verwalteten Objekten umfassen, und umfassend eine externe Netzverwaltungsschnittstelle (10),
**dadurch gekennzeichnet,**
**dass** es die folgenden Schritte umfasst:
- Bereitstellen (100) einer Darstellung des Basisnetzinformationsmodells in einer maschinenlesbaren Form von einer Fremdschnittstelle für erste Zuordnungsmittel,
- Erzeugen (101) oder Abrufen von Zuordnungsregeln zum Zuordnen der Darstellung des Basisnetzinformationsmodells zu einem formalen ontologiebasierten Netzinformationsmodell in einer bestimmten Ontologie-Sprachsyntax,
- Weiterleiten (102B) der erzeugten oder abgerufenen Zuordnungsregeln an ein Verarbeitungsmittel,
- Speichern (106) der Zuordnungsregeln im Verarbeitungsmittel;
- semantisches Anreichern (102A) des formalen ontologiebasierten Modells, um ein angereichertes formales ontologiebasiertes Netzinformationsmodell bereitzustellen;
- Bereitstellen (103) des angereicherten formalen ontologiebasierten Netzinformationsmodells für das Verarbeitungsmittel, und
- Bereitstellen (104) von Netzinstanzdaten von der externen Netzverwaltungsschnittstelle für das Verarbeitungsmittel;
- Verwenden der Zuordnungsregeln und der Netzinstanzdaten, die im Verarbeitungsmittel gespeichert sind, zum automatischen Instanziieren (105) des angereicherten formalen ontologiebasierten Netzinformationsmodells im Verarbeitungsmittel; und infolgedessen Bereitstellen einer formalen Darstellung der Netzdaten;
- Speichern (106) der formalen Darstellung der Netzdaten in Formalmodellspeichermitteln und infolgedessen Bilden einer semantisch erweiterten konfigurationsbewussten externen Netzverwaltungsschnittstelle.

14. Verfahren nach Anspruch 13,
**dadurch gekennzeichnet,**
**dass** das Basisnetzinformationsmodell eine UML-Informationsmodelldarstellung umfasst.

15. Verfahren nach Anspruch 14,
**dadurch gekennzeichnet,**
**dass** die UML-Darstellung den OMG XMI-Standard einhält.

16. Verfahren nach Anspruch 15,
**dadurch gekennzeichnet,**
**dass** der Schritt des Erzeugens der Zuordnungsregeln umfasst:
- Zuordnen der UML-Darstellung zu einer bestimmten Ontologie-Sprachsyntax.

17. Verfahren nach einem der Ansprüche 13 bis 16,
**dadurch gekennzeichnet,**
**dass** der Anreicherungsschritt umfasst:
- Hinzufügen von Informationsinvarianten über Eigenschaften, Konzepte und/oder Beziehungen, welche Netzdomäneninformationen umfassen.

18. Verfahren nach Anspruch 17,
**dadurch gekennzeichnet,**
**dass** der Anreicherungsschritt ferner umfasst:
- Hinzufügen von Netzmodellhandhabungsinformationen zur Erzeugung von Konfigurationsaufgaben-Workflows.

19. Verfahren nach einem der Ansprüche 13 bis 18,
**dadurch gekennzeichnet,**
**dass** die Netzinstanzdaten Bulk XML-Daten umfassen.

20. Verfahren nach einem der Ansprüche 13 bis 19,
**dadurch gekennzeichnet,**
**dass** die externe Netzverwaltungsschnittstelle (10) eine Northbound-NMS-Schnittstelle umfasst.

21. Verfahren nach einem der Ansprüche 13 bis 20,
**dadurch gekennzeichnet,**
**dass** es den folgenden Schritt im Verarbeitungsmittel umfasst:
- Verwenden von Beschreibungslogiken, um die formalen logischen Anweisungen auszudrücken, welche die Instanzen und Ontologien in der Ontologie-Sprachsyntax darstellen.

22. Verfahren nach einem der Ansprüche 13 bis 20,
**dadurch gekennzeichnet,**
**dass**
es den folgenden Schritt im Verarbeitungsmittel umfasst:
- Verwenden von Rahmenlogik, um die formalen logischen Anweisungen auszudrücken, welche die Instanzen und Ontologien in der Ontologie-Sprachsyntax darstellen.

23. Verfahren nach einem der Ansprüche 13 bis 22,
**dadurch gekennzeichnet, dass**
es den folgenden Schritt umfasst:
- Speichern der formalen Darstellung der Netzdaten, die in formalen logischen Anweisungen, z. B. in Beschreibungslogiken oder Rahmenlogiken, ausgedrückt werden, in Formalmodellspeichermitteln und infolgedessen Bereitstellen einer semantisch angereicherten maschinenlesbaren Netzmodelldarstellung.

24. Verfahren nach Anspruch 23,
**dadurch gekennzeichnet, dass** es die folgenden Schritte umfasst:
- Bereitstellen einer Brücke zwischen dem Netzverwaltungssystem und externen dienstorientierten Architekturen unter Verwendung der angereicherten maschinenlesbaren Netzmodelldarstellung als eine semantisch erweiterte konfigurationsbewusste externe Netzverwaltungsschnittstelle.

## Revendications

1. Système de représentation d'information de gestion de réseau, comprenant un système de gestion de réseau représenté par l'intermédiaire d'un modèle de réseau de base lisible par machine, comprenant un nombre d'éléments de réseau, comprenant chacun un nombre d'objets gérés avec des instances d'objets gérés et comprenant en outre une interface de gestion de réseau externe (10),
**caractérisé en ce**
**qu'**il comprend un premier moyen de mise en correspondance (1) adapté pour générer ou extraire des règles de mise en correspondance pour mettre en correspondance le modèle d'information de réseau de base lisible par machine avec un modèle d'informations de réseau basé sur ontologie formel,
un moyen d'enrichissement d'information (2) pour enrichir manuellement et/ou automatiquement l'information de modèle basé sur ontologie formel sémantiquement, en fournissant ainsi un modèle d'information de réseau formel basé sur ontologie enrichi sémantiquement,
un moyen de traitement (3) adapté pour recevoir les règles de mise en correspondance provenant du premier moyen de mise en correspondance (1), des données d'instance de réseau représentées par un langage de balisage générique provenant de l'interface de gestion de réseau externe, et le modèle d'information de réseau basé sur ontologie formel sémantiquement enrichi, et instancier automatiquement le modèle basé sur ontologie formel sémantiquement enrichi en utilisant lesdites règles de mise en correspondance et transformer le modèle d'information de réseau d'ontologie formel enrichi comprenant des instances et des ontologies en déclarations logiques formelles, un moyen de mémorisation de modèle formel pour mémoriser les déclarations logiques formelles et en ce que ledit moyen de mémorisation de modèle formel (5) contient une représentation lisible par machine sémantiquement enrichie du modèle d'informations de système de gestion de réseau formant une interface de gestion de réseau externe averti es configurations sémantiquement étendu (20).

2. Système selon la revendication 1,
**caractérisé en ce**
**que** le modèle d'information de réseau de base comprend une représentation de modèle d'information UML.

3. Système selon la revendication 2,
**caractérisé en ce**
**que** la représentation UML est échangeable avec la norme d'inter changement de métadonnées OMG XMI, OMG XML.

4. Système selon la revendication 2 ou 3,
**caractérisé en ce**
**que** le premier moyen de mise en correspondance (1) est adapté pour effectuer une mise en correspondance de la représentation UML avec une syntaxe de langage d'ontologie donné.

5. Système selon la revendication 4,
**caractérisé en ce**
**que** la syntaxe de langage ontologie est OWL.

6. Système selon une quelconque des revendications précédentes,
**caractérisé en ce**
**que** le moyen d'enrichissement (2) est adapté pour ajouter des invariants d'information sur les propriétés, concepts et/ou relations comprenant des informations de domaine de réseau.

7. Système selon la revendication 6,
**caractérisé en ce**
**que** l'information ajoutée comprend additionnellement une information de manipulation de modèle de réseau à utiliser pour la génération d'un flux de travail de tâche de configuration.

8. Système selon une quelconque des revendications précédentes,
**caractérisé en ce**
**que** les données d'instance de réseau sont représentées sur la base de 3GPP Bulk XML IRP.

9. Système selon une quelconque des revendications précédentes,
**caractérisé en ce**
**que** l'interface de gestion de réseau externe comprend une interface NMS vers le nord.

10. Système selon une quelconque des revendications précédentes,
**caractérisé en ce**
**que** les déclarations logiques formelles représentant les instances et les ontologies dans la syntaxe de langage d'ontologie sont exprimées en utilisant des logiques de description.

11. Système selon une quelconque des revendications 1 à 9,
**caractérisé en ce**
**que** les déclarations logiques formelles représentant les instances et ontologies dans la syntaxe de langage d'ontologie sont exprimées en utilisant des logiques de trame, logiques F.

12. Système selon une quelconque des revendications précédentes,
**caractérisée en ce**
**que** l'interface de gestion de réseau externe averti des configurations sémantiquement étendue (20) est adapté pour fournir un pont entre le système de gestion de réseau et les architectures externes orientées service.

13. Procédé de représentation d'information de gestion de réseau d'un système de gestion de réseau représenté par l'intermédiaire d'un modèle d'information de réseau de base lisible par machine comprenant un nombre d'éléments de réseau, comprenant chacun un nombre d'objets gérés avec des instances d'objets gérés, et comprenant une interface de gestion de réseau externe,
**caractérisé en ce**
**qu'**il comprend les étapes consistant à :
- fournir (100) une représentation du modèle d'informations de réseau de base sous une forme lisible par machine depuis une interface de tierce partie externe vers un premier moyen de mise en correspondance,
- générer (101) ou extraire les règles de mise en correspondance pour mettre en correspondance la représentation du modèle d'information de réseau de base avec un modèle d'information de réseau basé sur ontologie formel dans une syntaxe de langage d'ontologie donné,
- acheminer (102B) les règles de mise en correspondances générées ou extraites vers un moyen de traitement,
- mémoriser (106) les règles de mise en correspondance dans le moyen de traitement,
- enrichir (102A) sémantiquement le modèle basé sur ontologie formel, afin de fournir un modèle d'informations de réseau basé sur ontologie formel enrichi,
- fournir (103) le modèle d'informations de réseau basé sur ontologie formel enrichi au moyen de traitement et
- fournir (104) des données d'instance de réseau provenant de l'interface de gestion de réseau externe au moyen de traitement,
- utiliser les règles de mise en correspondance et les données d'instance de réseau mémorisé dans le moyen de traitement pour instancier automatiquement (105) le modèle d'informations de réseau basé sur ontologie formel enrichi dans ledit moyen de traitement ; en fournissant ainsi une représentation formelle des données de réseau ;
- mémoriser (106) la représentation formelle des données de réseau dans le moyen de mémorisation de modèle formel, en formant ainsi une interface de gestion de réseau externe avertie des configurations, sémantiquement étendue.

14. Procédé selon la revendication 13,
**caractérisé en ce**
**que** le modèle d'informations de réseau de base comprend une représentation de modèle d'information UML.

15. Procédé selon la revendication 14,
**caractérisé en ce**
**que** la représentation UML suit la norme OMG XMI.

16. Procédé selon la revendication 15,
**caractérisé en ce**
**que** l'étape de génération de règles de mise en correspondance comprend de :
- mettre en correspondance la représentation UML avec une syntaxe de langage d'ontologie donnée.

17. Procédé selon une quelconque des revendications 13 à 16,
**caractérisé en ce**
**que** l'étape d'enrichissement comprend de :
- ajouter des invariants d'information sur les propriétés, concepts et/ou relations comprenant une information de domaine de réseau.

18. Procédé selon la revendication 17,
**caractérisé en ce**
**que** l'étape d'enrichissement comprend en outre de :
- ajouter une information de manipulation de modèle de réseau pour la génération de flux de travail de tâches de configuration.

19. Procédé selon une quelconque des revendications 13 à 18,
**caractérisé en ce**
**que** les données d'instance de réseau comprennent des données Bulk XML.

20. Procédé selon une quelconque des revendications 13 à 19,
**caractérisé en ce**
**que** l'interface de gestion de réseau externe (10) comprend une interface NMS vers le nord.

21. Procédé selon une quelconque des revendications 13 à 20,
**caractérisée en ce**
**qu'**il comprend l'étape de, dans le moyen de traitement :
- utiliser des logiques de description pour exprimer les déclarations logiques formelles représentant les instances et les ontologies dans la syntaxe de langage d'ontologie.

22. Procédé selon une quelconque des revendications 13 à 20
**caractérisé en ce**
**qu'**il comprend l'étape de, dans le moyen de traitement :
- utiliser une logique de trame pour exprimer les déclarations logiques formelles représentant les instances et les ontologies dans la syntaxe de langage d'ontologie.

23. Procédé selon une quelconque des revendications 13 à 22,
**caractérisé en ce**
**qu'**il comprend l'étape consistant à :
- mémoriser la représentation formelle des données de réseau exprimées dans des déclarations logiques formelles, par exemple en logique de description ou en logique de trame, en fournissant ainsi une représentation de modèle de réseau lisible par machine enrichie sémantiquement.

24. Procédé selon la revendication 23,
**caractérisée en ce**
**qu'**il comprend les étapes consistant à :
- fournir un pont entre le système de gestion de réseau et des architectures orientées services externes en utilisant la représentation de modèle de réseau lisible par machine enrichie comme une interface de gestion de réseau externe avertie des configuration, étendue sémantiquement.
